# EUROPEAN PATENT APPLICATION

(11) **EP 4 848 437 A1**
(43) Date of publication of application: **02.12.2026**
(21) Application number: 26180940.4
(22) Date of filing: 26.05.2026
(51) Int. Cl.: H01M 50/244, B65G 65/00, H01M 50/256

(54) **TRANSFER TOOLING**

(30) Priority: 30.05.2025 CN 202521108158 U
(71) Applicant: AESC Japan Ltd., Yokohama-shi, Kanagawa 220-0012 (JP)
(72) Inventor: DU, Huihui, Jiangyin City, Wuxi City (CN); QIU, Shuaike, Jiangyin City, Wuxi City (CN)
(74) Representative: Becker, Eberhard

(57) **Abstract**

Disclosed is a transfer tooling adapted to transfer a battery pack (P), and including: a frame (1); a transmission assembly (2); and a push-pull structure (3) detachably connected to the battery pack (P). The frame (1) is provided with multiple roller groups arranged side by side in a first direction. Each roller group includes multiple roller units (11) rotatably connected to the frame (1) and distributed along a second direction. The first direction and the second direction are a width direction and a length direction of the frame (1), respectively. The transmission assembly (2) is connected to the frame (1) and located between adjacent roller groups. The push-pull structure (3) is located above the frame (1) and connected to the transmission assembly (2). The transmission assembly (2) is configured to drive the battery pack (P) to move along the second direction through the push-pull structure (3).

## Description

### BACKGROUND

### Technical Field

The present disclosure relates to the field of battery technology, and in particular to a transfer tooling.

### Related Art

An energy storage device typically includes a truss structure and a plurality of battery packs. The truss structure defines layered receiving positions such that the plurality of battery packs are closely stacked therein in a vertical direction. During assembly or replacement of a battery pack, lifting equipment such as a forklift is employed to elevate the battery pack to a target height, after which multiple workers cooperate to push the battery pack into a designated receiving position. However, the foregoing assembly method requires substantial manpower, exhibits low assembly efficiency, and may further increase the risk of damage to the battery pack due to forcible pushing and pulling during the operation.

### SUMMARY

### Technical problem

In view of this, the present disclosure proposes a transfer tooling to solve some or all of the technical problems mentioned above.

### Solution to Problem

The present disclosure provides a transfer tooling adapted to transfer a battery pack, and including a frame, a transmission assembly, and a push-pull structure detachably connected to the battery pack.

The frame is provided with a plurality of roller groups arranged side by side in a first direction. Each of the roller groups includes a plurality of roller units rotatably connected to the frame and distributed along a second direction, and the first direction and the second direction are a width direction and a length direction of the frame, respectively.

The transmission assembly is connected to the frame and is located between the adjacent roller groups.

The push-pull structure is located above the frame and is connected to the transmission assembly. The transmission assembly is configured to drive the battery pack to move along the second direction through the push-pull structure.

### Technical effect

As is apparent from the foregoing, the transfer tooling provided by the present disclosure includes the transmission assembly and the push-pull structure that are operatively interconnected. The transfer device employs the push-pull structure to achieve a detachable connection with the battery pack and utilizes the motive force supplied by the transmission assembly. In carrying out removal and installation operations of the battery pack, coordinated use of the transmission assembly and the push-pull structure enables the battery pack to be smoothly withdrawn from, or inserted into, a stowage position of a truss structure, thereby reducing operator effort, simplifying the disassembly/assembly procedure, improving operational efficiency, reducing occurrences of forcible pushing and pulling during manual handling, and effectively lowering the risk of damage to the battery pack during the disassembly/assembly process.

### BRIEF DESCRIPTION OF THE DRAWINGS

In order to more clearly illustrate the technical solutions in the present disclosure or related technologies, the drawings required for use in the description of the embodiments or related technologies will be briefly introduced below. Clearly, the drawings described below are merely embodiments of the present disclosure, and for those of ordinary skill in the field, other drawings may also be obtained based on these drawings without creative effort.
FIG. 1 is a schematic diagram of an energy storage device in an embodiment of the present disclosure.
FIG. 2 is a schematic diagram of the battery pack in an embodiment of the present disclosure.
FIG. 3 is a schematic diagram of an application state of a transfer tooling in an embodiment of the present disclosure.
FIG. 4 is a schematic diagram of the transfer tooling in an embodiment of the present disclosure.
FIG. 5 is a schematic diagram of a frame in an embodiment of the present disclosure.
FIG. 6 is a schematic diagram of a first type of transmission assembly of the transfer tooling in an embodiment of the present disclosure.
FIG. 7 is a schematic diagram of a second type of transmission assembly of the transfer tooling in an embodiment of the present disclosure.
FIG. 8 is a schematic diagram of a first working condition of a shipping tooling in an embodiment of the present disclosure.
FIG. 9 is a schematic diagram of a second working condition of the shipping tooling in an embodiment of the present disclosure.
FIG. 10 is a schematic diagram of a tensioning assembly in an embodiment of the present disclosure.
FIG. 11 is a schematic diagram of a push-pull structure in an embodiment of the present disclosure.
FIG. 12 is a schematic diagram of an anti-detachment fastener in an embodiment of the present disclosure.

### DESCRIPTION OF THE EMBODIMENTS

In order to make the purpose, technical solution, and advantages of the present disclosure clearer, the present disclosure is further described in detail below in conjunction with specific embodiments and with reference to the accompanying drawings.

It should be noted that, unless otherwise defined, the technical terms or scientific terms used in the embodiments of the present disclosure shall have the ordinary meanings understood by persons with ordinary skills in the field to which the present disclosure belongs. The terms "first", "second", and similar terms used in the embodiments of the present disclosure do not indicate any sequence, quantity, or importance, but are only used to distinguish different components. Terms such as "includes" or "comprises" mean that the elements or objects appearing before the term encompass the elements or objects listed after the term and their equivalents, without excluding other elements or objects. Terms such as "connected" or "coupled" are not limited to physical or mechanical connections, but may include electrical connections, whether direct or indirect. "Upper", "lower", "left", "right", and similar terms are only used to indicate relative positional relationships; when the absolute position of the described object changes, the relative positional relationship may also change accordingly.

The embodiments of the present disclosure are described in detail below with reference to the accompanying drawings.

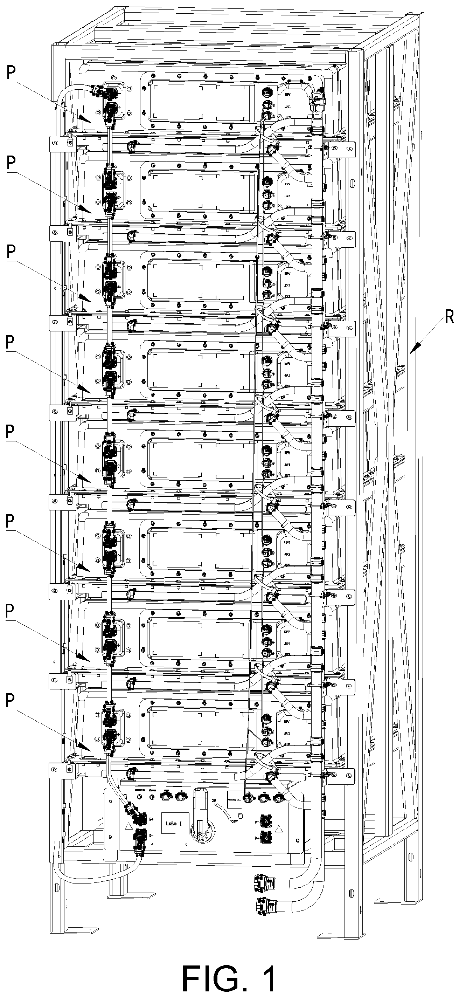

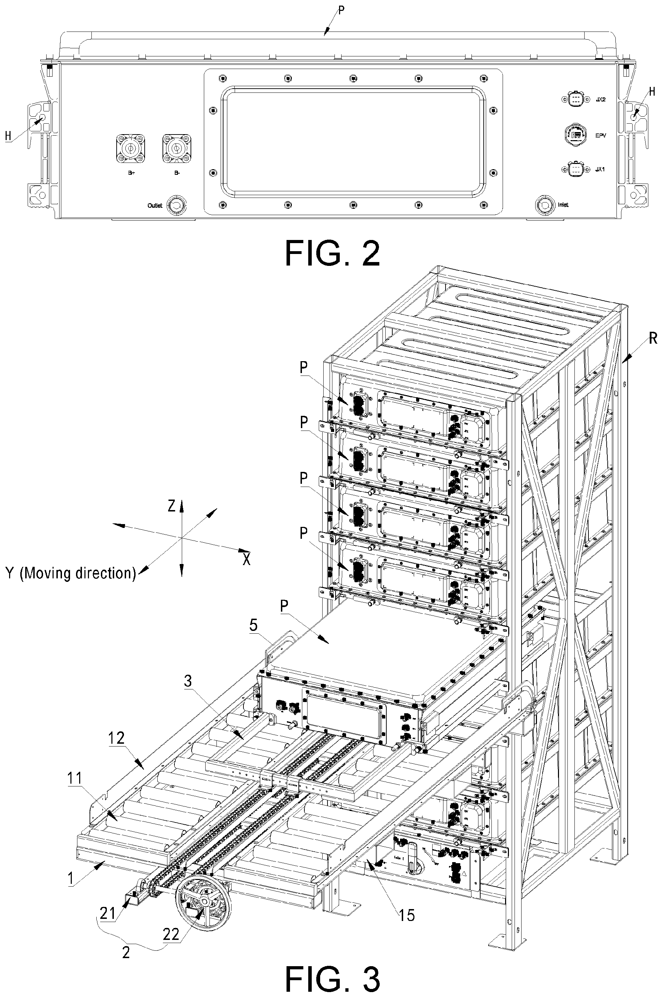

FIG. 1 is a schematic diagram of an energy storage device in an embodiment of the present disclosure, and FIG. 2 is a schematic diagram of a battery pack P in an embodiment of the present disclosure. According to the content shown in FIG. 1 and FIG. 2, the energy storage device may include a truss structure R and a plurality of battery packs P installed in mounting positions inside the truss structure R, and the plurality of battery packs P are compactly distributed in a height direction of the truss structure R.

During the assembly or maintenance of the energy storage device, operations involving the removal and installation of the battery pack P are often required. By way of example, in the assembly process of the battery pack P, a forklift truck must be used to elevate the battery pack P to a target height, after which multiple workers cooperate to push it into a designated position. However, the Applicant has found that the foregoing method of removing and installing the battery pack P presents clear drawbacks: first, reliance on manual pushing or dragging necessitates multi-person collaboration, which is not only time-consuming and labor-intensive, but also imposes stringent requirements on coordination among personnel; second, forcibly pushing or dragging the battery pack P increases the likelihood of collisions or abrasions between the battery pack P and the edge of the truss structure R, thereby elevating the risk of damage to the battery pack P. Additionally, the disassembly tooling for the battery pack P employed by some enterprises is structurally complex, costly, and poorly adaptable, thereby constraining the maintenance efficiency of energy storage device.

The present disclosure provides a transfer tooling adapted to transfer the battery pack P, and the transfer tooling is described in detail with reference to FIG. 3 to FIG. 12.

A transfer tooling includes a frame 1, a transmission assembly 2, and a push-pull structure 3 detachably connected to the battery pack P. The frame 1 is provided with a plurality of roller groups arranged side by side in a first direction. Each roller group includes a plurality of roller units 11 rotatably connected to the frame 1 and distributed along a second direction. The first direction and the second direction are a width direction and a length direction of the frame 1, respectively. The transmission assembly 2 is connected to the frame 1 and is located between the adjacent roller groups. The push-pull structure 3 is located above the frame 1 and is connected to the transmission assembly 2. The transmission assembly 2 drives the battery pack P to move along the second direction through the push-pull structure 3.

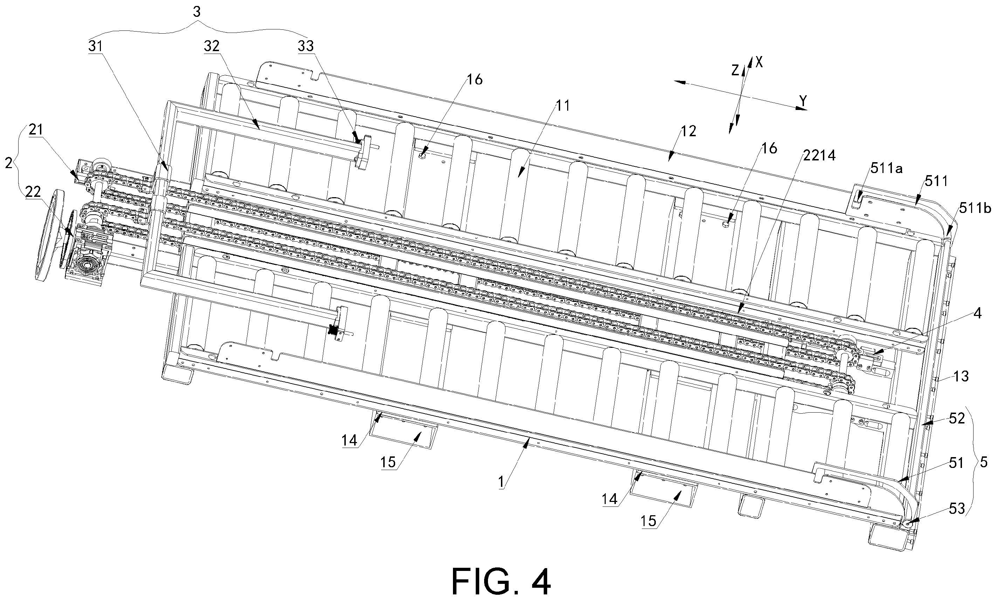

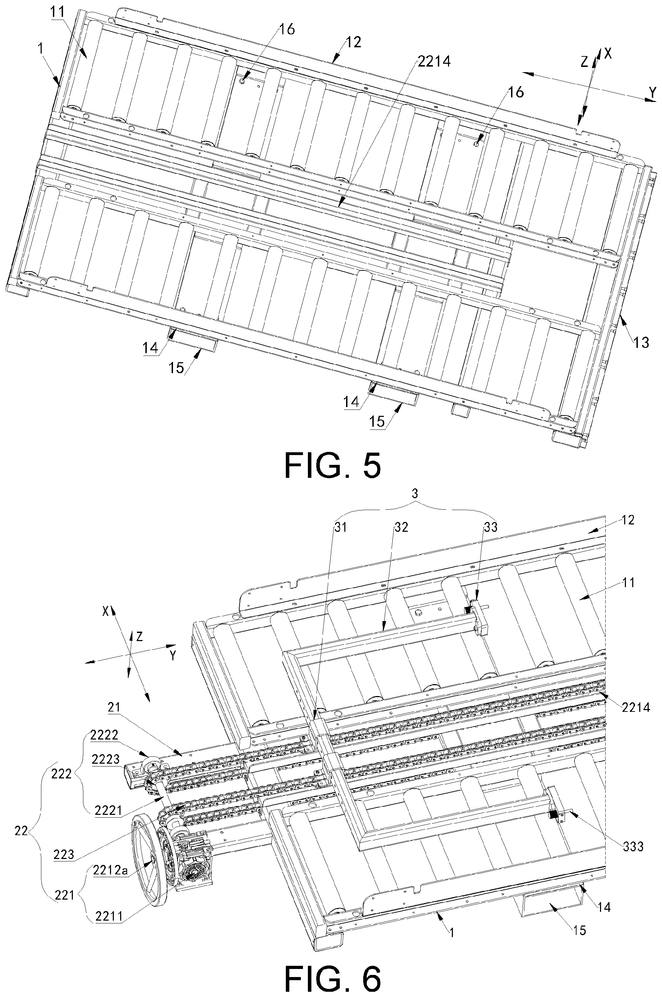

Specifically, as shown in FIG. 3 to FIG. 5, FIG. 3 is a schematic diagram of an application state of the transfer tooling in an embodiment of the present disclosure, FIG. 4 is a schematic diagram of the transfer tooling in an embodiment of the present disclosure, and FIG. 5 is a schematic diagram of the frame 1 in an embodiment of the present disclosure. The frame 1 is the main structure of the transfer tooling. More specifically, when the width direction of the frame 1 is defined as the first direction and the length direction thereof is defined as the second direction, the frame 1 is provided with the plurality of roller groups arranged side by side along the first direction. Each roller group includes the plurality of roller units 11 distributed along the second direction and each rotatably connected to the frame 1. When the transmission assembly 2 and the push-pull structure 3 drive the battery pack P to move along the second direction, at least a portion of the plurality of roller units 11 may support the battery pack P, ensuring that the battery pack P moves smoothly on the frame 1, so as to improve the efficiency of the transfer process of the battery pack P.

It should be noted that the width direction and the length direction of the frame 1 may be defined as an X direction and a Y direction, respectively, so as to facilitate understanding of the transfer tooling provided by the present disclosure in conjunction with the accompanying drawings.

Further, as shown in FIG. 3 and FIG. 4, the transmission assembly 2 is disposed between two of the adjacent roller groups and is fixedly connected to the frame 1, and this layout may increase a contact area between the roller groups and the battery pack P, ensuring the supporting effect of the roller groups on the battery pack P, and ensuring the balance and stability of the battery pack P during the transfer process.

Further, as shown in FIG. 3 and FIG. 4, the push-pull structure 3 is located above the frame 1 and is connected to the transmission assembly 2, and the transmission assembly 2 provides a motive force for the push-pull structure 3. When the push-pull structure 3 is connected to the battery pack P to be transferred, the transmission assembly 2 may drive the battery pack P to move along the second direction through the push-pull structure 3, so as to drive the battery pack P to be displaced in the second direction.

For example, when removing the battery pack P from the interior of the truss structure R, the transmission assembly 2 may drive the push-pull structure 3 to gradually move away from the truss structure R, so that the push-pull structure 3 pulls the battery pack P to be removed out of the mounting position inside the truss structure R, thereby achieving the removal of the battery pack P.

In another example, when assembling the battery pack P inside the truss structure R, the transmission assembly may drive the push-pull structure 3 to gradually approach the truss structure R, and push the battery pack P to the mounting position inside the truss structure R through the push-pull structure 3, thereby achieving the assembly of the battery pack P.

In some embodiments, as shown in FIG. 3 to FIG. 4, the transmission assembly 2 includes a bracket 21 fixedly connected to the frame 1, and a power transmission assembly 22 that drives the push-pull structure 3 to move along the second direction. Specifically, the bracket 21 is the main structure of the transmission assembly 2, and the bracket 21 may be utilized to install the transmission assembly 2 on the frame 1, thereby providing a suitable mounting position for the power transmission assembly 22.

Further, as shown in FIG. 3 to FIG. 4, the bracket 21 is located between the adjacent roller groups. When the battery pack P is placed on top of the roller groups, portions of the battery pack P on both sides of the bracket 21 are each capable of moving relative to the roller units 11, ensuring that the battery pack P maintains smooth movement during the transfer process.

Further, as shown in FIG. 3 and FIG. 4, the power transmission assembly 22 is connected to the bracket 21 and the push-pull structure 3, respectively, and the power transmission assembly 22 may be utilized to provide the motive force for the push-pull structure 3, enabling the push-pull structure 3 to smoothly push or pull the battery pack P to move along the roller groups.

In some embodiments, as shown in FIG. 4, the power transmission assembly 22 includes a power unit 221 for outputting the motive force, two sprocket transmission mechanisms 222 disposed on the bracket 21, and a chain 223 drivingly connected to the two sprocket transmission mechanisms 222, respectively. The power unit 221 is drivingly connected to each sprocket transmission mechanism 222 through the chain 223. When the power unit 221 provides a corresponding motive force to the sprocket transmission mechanisms 222, the two sprocket transmission mechanisms 222 may transmit the motive force to the chain 223, so as to drive the portion of the chain 223 located above the bracket 21 to move along the second direction through the sprocket transmission mechanisms 222.

Further, as shown in FIG. 4, in order to ensure that the battery pack P has a sufficient range of travel on the frame 1, the two sprocket transmission mechanisms 222 are arranged in the second direction, so that a portion of the chain 223 located above the bracket 21 extends along the second direction, ensuring that the chain 223 may drive the battery pack P to move in the second direction during operation.

Further, as shown in FIG. 4, the chain 223 is fixedly connected to the push-pull structure 3, and as the chain 223 continuously moves, a portion thereof located above the bracket 21 is capable of driving the push-pull structure 3 fixedly connected thereto to move along the second direction, thereby driving the battery pack P to move along the second direction, so as to assist the disassembly and assembly operation of the battery pack P.

In some embodiments, as shown in FIG. 4, each sprocket transmission mechanism 222 includes a rotatable transmission shaft 2221, at least two bearing housings 2222 connected to the transmission shaft 2221, and a sprocket 2223 fixedly connected to the transmission shaft 2221. At least two bearing housings 2222 in each sprocket transmission mechanism 222 are arranged in the first direction for providing a mounting position for the transmission shaft 2221 and supporting the same.

Further, as shown in FIG. 4, the sprocket 2223 is meshed with the corresponding chain 223. When the power unit 221 drives the corresponding transmission shaft 2221 connected thereto to rotate through an output end thereof, the transmission shaft 2221 may drive the corresponding sprocket 2223 to rotate synchronously, such that the sprocket 2223 drives the chain 223 meshed therewith to move simultaneously, so that a portion of the chain 223 located above the bracket 21 drives the push-pull structure 3 to move in the second direction.

In some embodiments, as shown in FIG. 4, one of the two sprocket transmission mechanisms 222 is connected to the bracket 21 through a tensioning assembly 4. By applying the tensioning assembly 4 in the transfer tooling, a distance between the two sprocket transmission mechanisms 222 in the second direction may be adjusted, so as to adjust the chain 223 to a suitable tension level, thereby ensuring the driving effect of the chain 223 on the push-pull structure 3.

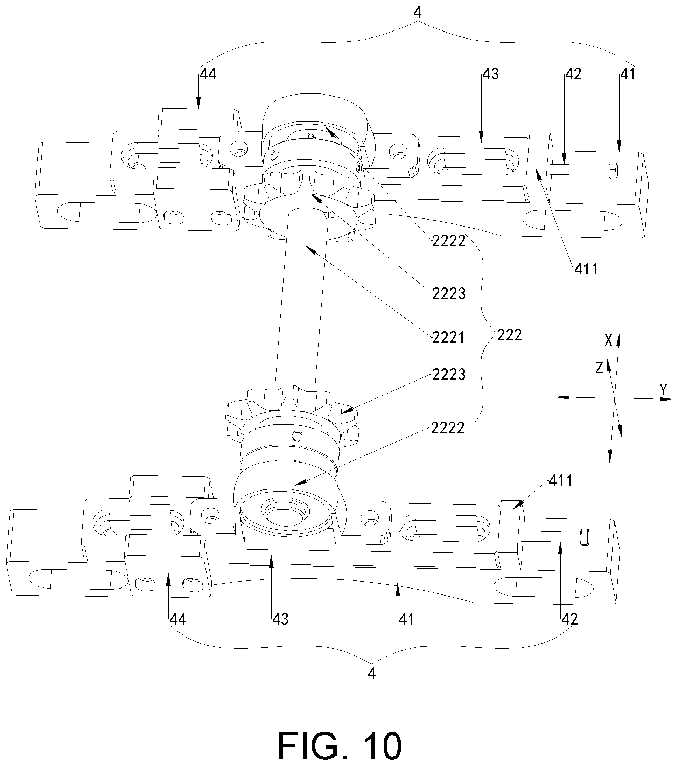

Further, as shown in FIG. 10, FIG. 10 is a schematic diagram of the tensioning assembly 4 in an embodiment of the present disclosure. The tensioning assembly 4 includes a fixing frame 41, a lead screw 42, and an adjusting base 43 capable of sliding relative to the fixing frame 41. The fixing frame 41 is fixedly connected to the bracket 21, and the top of the fixing frame 41 protrudes to form a protruding portion 411, and the fixing frame 41, as the main structure of the tensioning assembly 4, may support the adjusting base 43. The protruding portion 411 protruding from the top of the fixing frame 41 may provide a mounting position for the lead screw 42, ensuring that a stable transmission relationship may be established between the adjusting base 43 located at the top of the fixing frame 41 and the lead screw 42.

Further, as shown in FIG. 10, the lead screw 42 is threadedly engaged with the protruding portion 411 and extends along the second direction, and an end portion of the lead screw 42 is rotatably connected to the adjusting base 43. When the lead screw 42 is utilized to adjust a position of the adjusting base 43, rotating the lead screw 42 may drive the adjusting base 43 to move along the second direction and slide relative to the fixing frame 41, thereby changing the position of the adjusting base 43 at the top of the fixing frame 41.

Further, as shown in FIG. 10, the adjusting base 43 is fixedly connected to the bearing housing 2222, and the adjusting base 43 is utilized to support the bearing housing 2222, so that the corresponding bearing housing 2222 moves synchronously with the adjusting base 43, such that a distance between the bearing housings 2222 in the two different sprocket transmission mechanisms 222 also changes, thereby achieving the adjustment of the tension of the chain 223.

In some embodiments, as shown in FIG. 10, the tensioning assembly 4 further includes a limiting assembly 44 that limits a sliding trajectory of the adjusting base 43. By applying the limiting assembly 44 in the tensioning assembly 4, it may be ensured that the adjusting base 43 moves along the second direction, ensuring the precise control of the tensioning assembly 4 over the tension of the chain 223.

Further, as shown in FIG. 10, the limiting assembly 44 includes two limiting blocks arranged in the first direction and both fixedly connected to the fixing frame 41. The two limiting blocks are spaced apart so as to form a limiting space therebetween for limiting a movement trajectory of the adjusting base 43. When the rotating lead screw 42 drives the adjusting base 43 to slide along the second direction, the adjusting base 43 is capable of sliding along a slideway 511 in a straight line under the restriction of the two limiting blocks, thereby ensuring an adjustment effect of the tensioning assembly 4 on the chain 223.

In some embodiments, as shown in FIG. 4, the power unit 221 includes a speed-reduction gearbox 2211 and a driving component that are drivingly connected to each other, and the speed-reduction gearbox 2211 is drivingly connected to each sprocket transmission mechanism 222 through the chain 223. When the transmission assembly 2 drives the battery pack P to move through the push-pull structure 3, the driving component provides a motive force to the speed-reduction gearbox 2211, and the speed-reduction gearbox 2211 is utilized to adjust an output rotational speed of the power unit 221, thereby controlling a moving speed of the chain 223 and improving the stability of the transmission assembly 2 in driving the battery pack P.

Further, the driving component is a handle 2212a or a motor 2212b. As shown in FIG. 6, FIG. 6 is a schematic diagram of a first type of the transmission assembly 2 of the transfer tooling in an embodiment of the present disclosure. When the driving component is the handle 2212a, the difficulty of driving the sprocket transmission mechanism 222 may be reduced, facilitating direct control through manpower, which is conducive to providing flexibility in driving the battery pack P.

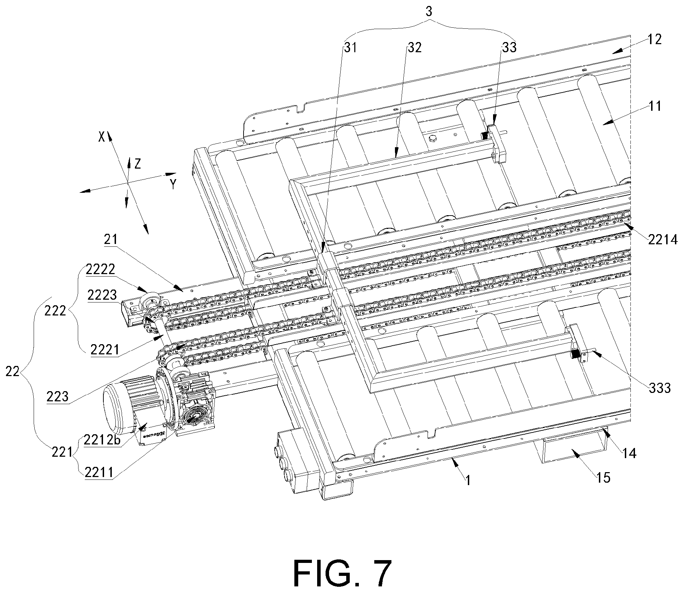

In another example, as shown in FIG. 7, FIG. 7 is a schematic diagram of a second type of the transmission assembly 2 of the transfer tooling in an embodiment of the present disclosure. When the driving component is the motor 2212b, an efficient, stable, and automatically controllable power output may be provided to the sprocket transmission mechanism 222, which helps to reduce the labor burden on the staff.

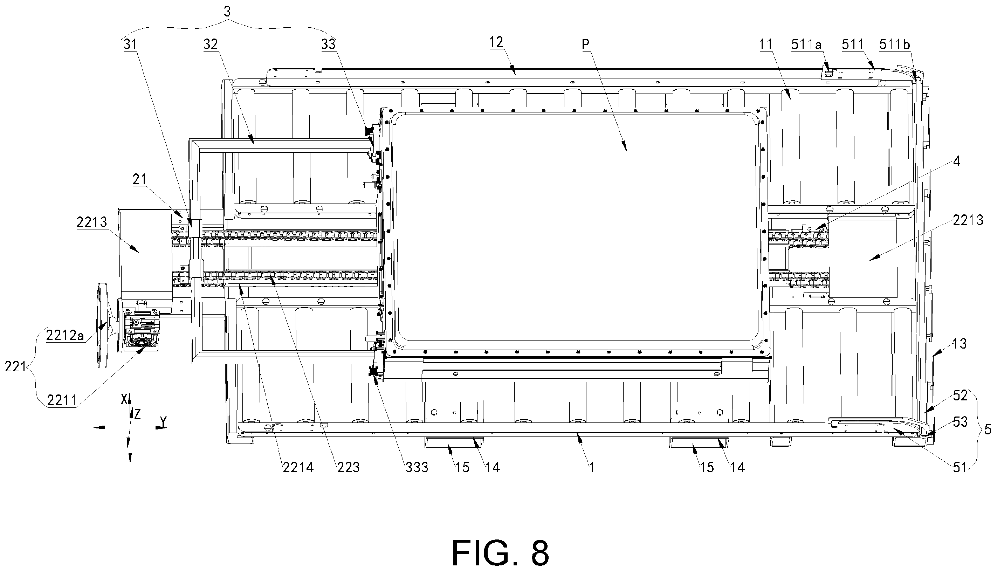

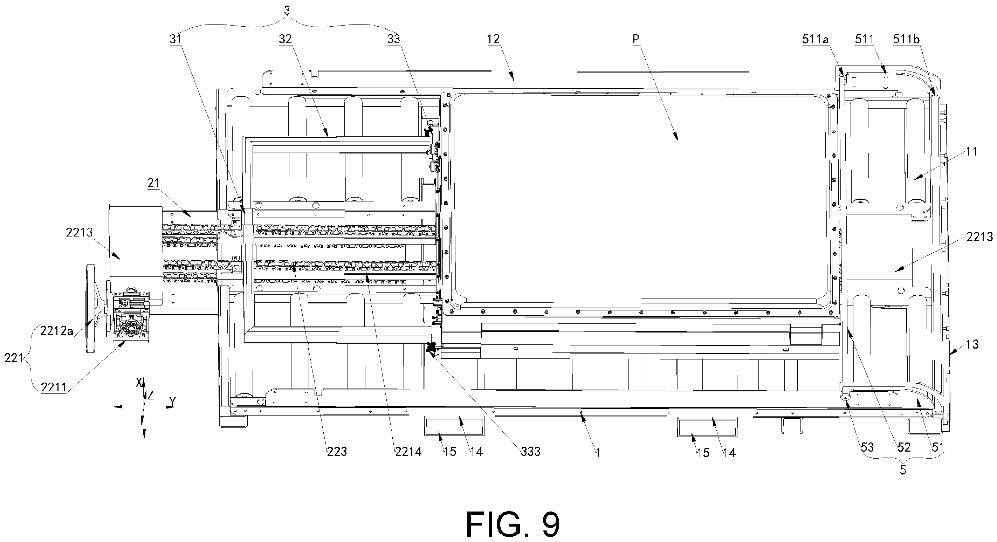

In some embodiments, as shown in FIG. 8 and FIG. 9, FIG. 8 is a schematic diagram of a first working condition of a shipping tooling in an embodiment of the present disclosure, and FIG. 9 is a schematic diagram of a second working condition of the shipping tooling in an embodiment of the present disclosure. The bracket 21 is provided with a protective cover 2213 corresponding to a transmission component, namely a sprocket 2223, and the protective cover 2213 covers at least a portion of the corresponding sprocket 2223 served as the transmission component, so as to provide effective protection for the sprocket 2223 served as the transmission component.

In some embodiments, as shown in FIG. 4 to FIG. 7, a side of the bracket 21 facing the chain 223 is provided with a chain accommodating groove 2214, and the chain accommodating groove 2214 extends along the second direction. That is, an extending direction of the chain accommodating groove 2214 is consistent with a direction of a portion of the chain 223 located above the bracket 21, preventing the chain 223 from coming into contact with or rubbing against the frame 1 during movement, thereby ensuring the smoothness of the transmission process of the chain 223.

In some embodiments, as shown in FIG. 4 to FIG. 9, the top of the frame 1 further includes a limiting structure 5 that limits the position of the battery pack P, and the limiting structure 5 includes two support plates 51, a limiting rod 52 capable of sliding relative to the two support plates 51, and a limiting portion 3333 connected to an end portion of the limiting rod 52. The two support plates 51 are connected to opposite sides of the frame 1 in the first direction to support the limiting rod 52. Each support plate 51 is provided with the slideway 511, and the limiting rod 52 is slidably disposed within the slideway 511 and extends along the first direction, and the slideway 511 may be utilized to define a movement trajectory of the limiting rod 52, such that when the limiting rod 52 is located at different positions within the slideway 511, a limiting state of the limiting rod 52 on the battery pack P may be changed.

Further, as shown in FIG. 8 and FIG. 9, for the frame 1, a height direction of the frame 1 may be defined as a third direction. In the slideway 511, the slideway 511 has a first limiting end 511a and a second limiting end 511b whose height in the third direction is lower than a height of the first limiting end 511a. A height of the roller unit 11 in the third direction is lower than a height of the first limiting end 511a. As shown in FIG. 8, when the limiting rod 52 slides to the first limiting end 511a, a position of the limiting rod 52 is higher than a position of the roller group, and a limiting effect of the limiting rod 52 may be utilized to prevent the transmission assembly 2 and the push-pull structure 3 from continuing to push the battery pack P to move, and the push-pull structure 3 and the limiting structure 5 may also clamp and fix the battery pack P in this state, which helps to improve the stability of the battery pack P when the forklift lifts the transfer tooling. In addition, the height of the roller unit 11 in the third direction is also greater than a height of the second limiting end 511b. When the limiting rod 52 slides to a second limiting end, the height of the position of the limiting rod 52 is lower than the height of the roller unit 11, at which point the limiting rod 52 does not impede the movement process of the battery pack P, that is, the movement restriction on the battery pack P is released, so as to utilize the transfer tooling to perform disassembly and assembly operations on the battery pack P.

It should be noted that the height direction of the frame 1 may be defined as a Z direction, so as to facilitate the understanding of the transfer tooling provided by the present disclosure in conjunction with the drawings. Further, the third direction may be perpendicular to the first direction and the second direction respectively, which will not be repeated here.

Further, as shown in FIG. 8 and FIG. 9, the first limiting end 511a is farther away from the power unit 221 relative to the second limiting end 511b in the second direction, and such arrangement facilitates the rapid switching of the limiting rod 52 between the first limiting end 511a and the second limiting end 511b.

Further, as shown in FIG. 8 and FIG. 9, an anti-detachment portion 53 is fixedly connected to the end portion of the limiting rod 52, and a function of the anti-detachment portion 53 is to reliably constrain the limiting rod 52 within the slideway 511, thereby preventing the limiting rod 52 from accidentally detaching from the slideway 511 as well as enhancing the stability of the limiting rod 52 during movement.

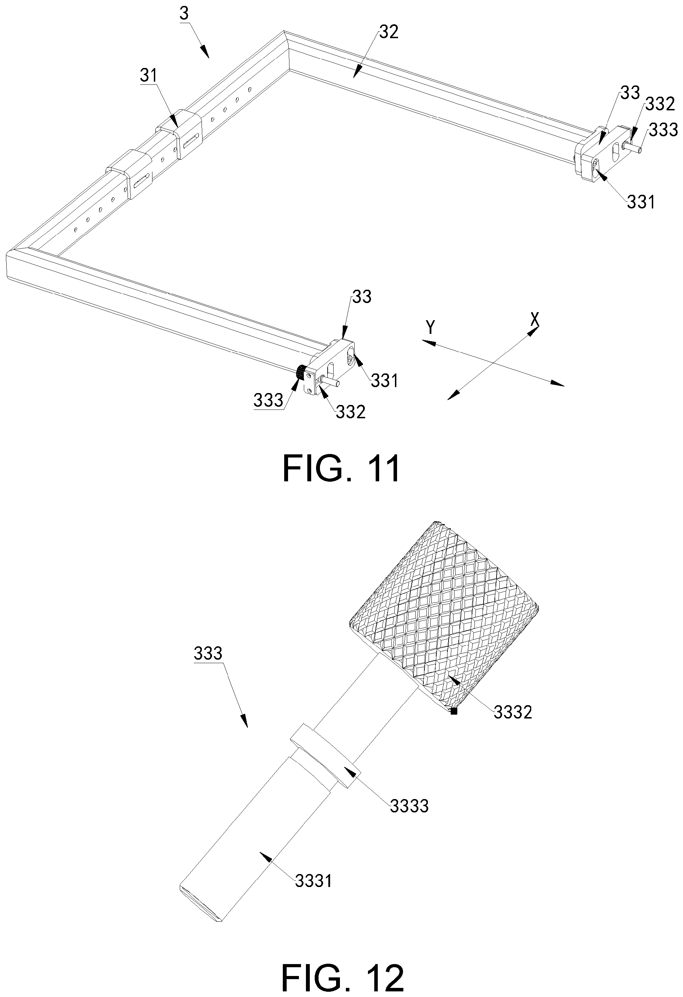

In some embodiments, FIG. 11 is a schematic diagram of the push-pull structure 3 in an embodiment of the present disclosure. As shown in FIG. 4, FIG. 8, FIG. 9, and FIG. 11, the push-pull structure 3 includes a first connecting member 31 fixedly connected to the transmission assembly 2, a U-shaped rod 32, and a second connecting member 33 detachably connected to the battery pack P. The first connecting member 31 is connected to the U-shaped rod 32 to fix the U-shaped rod 32 to a portion of the chain 223 located above the bracket 21, so that the U-shaped rod 32 moves synchronously with the chain 223.

Further, as shown in FIG. 8, FIG. 9, and FIG. 11, the U-shaped rod 32 is bent toward the power unit 221 to form a bent portion, and the first connecting member 31 is connected through the bent portion. An end portion of the U-shaped rod 32 is disposed away from the power unit 221, and a connection is established with the battery pack P to be transferred through the end portion thereof.

Further, as shown in FIG. 8, FIG. 9, and FIG. 11, the second connecting member 33 is detachably connected to the end portion of the U-shaped rod 32, so as to replace different types of connecting members to transfer the battery packs P of different specifications.

In some embodiments, as shown in FIG. 11, the height direction of the frame 1 may be defined as the third direction, and the second connecting member 33 is provided with a first elongated hole 331 extending along the third direction and a second elongated hole 332 extending along the first direction. The first elongated hole 331 is penetrated by a connecting fastener, and the second connecting member 33 is detachably connected to the end portion of the U-shaped rod 32 through the connecting fastener, thereby realizing a fixed connection between the U-shaped rod 32 and a third connecting member. Since the first elongated hole 331 extends along the third direction, by adjusting a position of the connecting fastener within the first elongated hole 331, an installation height of the second connecting member 33 in the third direction may be flexibly adjusted to ensure that the second connecting member 33 matches a position of a corresponding threaded hole H on the battery pack P.

Further, as shown in FIG. 11, the second elongated hole 332 is penetrated by an anti-detachment fastener 333, and the anti-detachment fastener 333 may slide along the first direction within the second elongated hole 332, thereby realizing flexible adjustment of its installation position in the first direction, ensuring precise alignment of the anti-detachment fastener 333 with the corresponding threaded hole H on the battery pack P. The anti-detachment fastener 333 is movably connected to the third connecting member, which not only maintains the reliability of the connection between the components, but also prevents the fastener from being lost. In addition, the anti-detachment fastener 333 may be utilized to establish a detachable connection relationship between the second connecting member 33 and the battery pack P, facilitating the disassembly and assembly operations between the battery pack P and the push-pull structure 3.

In some embodiments, as shown in FIG. 12, FIG. 12 is a schematic diagram of the anti-detachment fastener 333 in an embodiment of the present disclosure. The anti-detachment fastener 333 includes a rotating shaft portion 3331, a tightening portion 3332 connected to an end of the rotating shaft portion 3331 facing the U-shaped rod 32, and the limiting portion 3333 that constrains the rotating shaft portion 3331 within the second elongated hole 332. The rotating shaft portion 3331 extends along the second direction and penetrates through the second elongated hole 332, and an end thereof away from the power unit 221 is provided with a thread, so as to be detachably connected with the battery pack P.

Further, as shown in FIG. 11 and FIG. 12, a peripheral wall of the tightening portion 3332 is provided with anti-slip patterns, and the anti-slip patterns may increase a surface roughness of the tightening portion 3332, improving the friction during operation, thereby enhancing the tightening effect. Furthermore, the limiting portion 3333 is disposed protruding from a peripheral wall of the rotating shaft portion 3331, and the limiting portion 3333 may be utilized to reliably limit the rotating shaft portion 3331 within the second elongated hole 332 to prevent detachment and loss.

In some embodiments, as shown in FIG. 4, FIG. 5, FIG. 8, and FIG. 9, a side of the frame 1 away from the power unit 221 is provided with a buffer portion 13 for protecting the frame 1. When the frame 1 is in contact with the truss structure R, the buffer portion 13 may effectively absorb impact energy, reduce the collision force of the frame 1 on the truss structure R, and enhance a contact tightness between the transfer tooling and the truss structure R, thereby improving the application safety and operational reliability of the transfer tooling.

Exemplarily, the buffer portion 13 may be formed using buffering urethane (polyurethane elastomer), which, due to excellent wear resistance, impact resistance, oil resistance, and high elasticity, possesses good shock absorption, noise reduction, and insulation properties. The present disclosure adopts buffering urethane as the buffer portion 13, which may ensure closer contact between the truss structure R and the frame 1 during the battery transfer process, and provides protection to the contact area between the two.

In some embodiments, as shown in FIG. 4 to FIG. 9, both of opposite sides of the frame 1 in the first direction are provided with limiting baffles 12, and the limiting baffles 12 extend along the second direction, preventing the battery pack P from detaching from the transfer tooling during movement along the second direction.

In some embodiments, as shown in FIG. 4 to FIG. 9, a bottom of the frame 1 is provided with a pad 14, and the pad 14 is connected to a plurality of hollow beams 15 arranged along the second direction through leveling bolts 16. Each hollow beam 15 extends along the first direction. The hollow beams 15 may be utilized to provide installation positions for equipment such as forklifts, facilitating the forklift to move the transfer tooling. Meanwhile, when the transfer tooling becomes inclined due to uneven ground at the installation site, the leveling bolts 16 may be adjusted to correct its horizontal state, thereby improving the practicality and flexibility of the transfer tooling.

## Claims

1. A transfer tooling, adapted to transfer a battery pack (P), comprising:
a frame (1);
a transmission assembly (2); and
a push-pull structure (3), detachably connected to the battery pack (P),
wherein
the frame (1) is provided with a plurality of roller groups arranged side by side in a first direction,
each of the roller groups comprises: a plurality of roller units (11), rotatably connected to the frame (1) and distributed along a second direction,
the first direction and the second direction are a width direction and a length direction of the frame (1), respectively,
the transmission assembly (2) is connected to the frame (1) and is located between the adjacent roller groups,
the push-pull structure (3) is located above the frame (1) and is connected to the transmission assembly (2), and
the transmission assembly (2) is configured to drive the battery pack (P) to move along the second direction through the push-pull structure (3).

2. The transfer tooling according to claim 1, wherein
the transmission assembly (2) comprises:
a bracket (21), fixedly connected to the frame (1), and
a power transmission assembly (22) that drives the push-pull structure (3) to move along the second direction,
wherein
the bracket (21) is located between the adjacent roller groups, and
the power transmission assembly (22) is connected to the bracket (21) and the push-pull structure (3), respectively.

3. The transfer tooling according to claim 2, wherein
the power transmission assembly (22) comprises:
a power unit (221);
two sprocket transmission mechanisms (222), disposed on the bracket (21); and
a chain (223), drivingly connected to the two sprocket transmission mechanisms (222), respectively,
wherein
the power unit (221) is drivingly connected to each of the sprocket transmission mechanisms (222) through the chain (223),
the two sprocket transmission mechanisms (222) are arranged in the second direction, and
the chain (223) is fixedly connected to the push-pull structure (3).

4. The transfer tooling according to claim 3, wherein
each of the sprocket transmission mechanisms (222) comprises:
a transmission shaft (2221);
at least two bearing housings (2222), connected to the transmission shaft (2221); and
a sprocket (2223), fixedly connected to the transmission shaft (2221),
wherein
at least two of the bearing housings (2222) are arranged in the first direction, and
the sprocket (2223) is meshed with the corresponding chain (223).

5. The transfer tooling according to claim 4, wherein
one of the two sprocket transmission mechanisms (222) is connected to the bracket (21) through a tensioning assembly (4),
the tensioning assembly (4) is configured to adjust a distance between the two sprocket transmission mechanisms (222) in the second direction to adjust a tension level of the chain (223),
the tensioning assembly (4) comprises: a fixing frame (41), a lead screw (42), and an adjusting base (43) capable of sliding relative to the fixing frame (41),
wherein
the fixing frame (41) is fixedly connected to the bracket (21), and a top of the fixing frame (41) protrudes to form a protruding portion (411),
the lead screw (42) is threadedly engaged with the protruding portion (411) and extends along the second direction, and
the adjusting base (43) is fixedly connected to the bearing housing (2222).

6. The transfer tooling according to claim 5, wherein
the tensioning assembly (4) further comprises: a limiting assembly (44) that limits a sliding trajectory of the adjusting base (43),
the limiting assembly (44) comprises: two limiting blocks arranged in the first direction,
the two limiting blocks are both fixedly connected to the fixing frame (41), and
the adjusting base (43) is capable of sliding relatively between the two limiting blocks.

7. The transfer tooling according to claim 3, wherein
the power unit (221) comprises: a speed-reduction gearbox (2211) and a driving component that are drivingly connected to each other,
the speed-reduction gearbox (2211) is drivingly connected to each of the sprocket transmission mechanisms (222) through the chain (223), and
the driving component is a motor (2212b) or a handle (2212a).

8. The transfer tooling according to claim 3, wherein
the bracket (21) is provided with a protective cover (2213) corresponding to one of the sprocket transmission mechanisms (222), and the protective cover (2213) covers at least a portion of the corresponding sprocket transmission mechanism (222); and/or
a side of the bracket (21) facing the chain (223) is provided with a chain accommodating groove (2214), and the chain accommodating groove (2214) extends along the second direction.

9. The transfer tooling according to claim 3, wherein
a top of the frame (1) further comprises: a limiting structure (5) that limits a position of the battery pack (P),
the limiting structure (5) comprises: two support plates (51), a limiting rod (52) capable of sliding relative to the two support plates (51), and an anti-detachment portion (53) fixedly connected to an end portion of the limiting rod (52),
wherein
the two support plates (51) are connected to opposite sides of the frame (1) in the first direction,
each of the support plates (51) is provided with a slideway (511),
the limiting rod (52) extends along the first direction and is disposed within the slideway (511),
the slideway (511) has a first limiting end (511a) and a second limiting end (511b) whose height in a third direction is lower than a height of the first limiting end (511a),
a height of the roller unit (11) in the third direction is lower than the height of the first limiting end (511a) and higher than the height of the second limiting end (511b),
the third direction is a height direction of the frame (1), and
the first limiting end (511a) is farther away from the power unit (221) relative to the second limiting end (511b) in the second direction.

10. The transfer tooling according to claim 3, wherein
the push-pull structure (3) comprises: a first connecting member (31) fixedly connected to the transmission assembly (2), a U-shaped rod (32), and a second connecting member (33) detachably connected to the battery pack (P),
wherein
the first connecting member (31) is connected to the U-shaped rod (32),
an end portion of the U-shaped rod (32) is disposed away from the power unit (221), and
the second connecting member (33) is detachably connected to the end portion of the U-shaped rod (32).

11. The transfer tooling according to claim 10, wherein
the second connecting member (33) is provided with:
a first elongated hole (331) extending along a third direction, and
a second elongated hole (332) extending along the first direction,
wherein
the third direction is a height direction of the frame (1),
the first elongated hole (331) is penetrated by a connecting fastener,
the second connecting member (33) is detachably connected to the end portion of the U-shaped rod (32) through the connecting fastener,
the second elongated hole (332) is penetrated by an anti-detachment fastener (333),
the second connecting member (33) is detachably connected to the battery pack (P) through the anti-detachment fastener (333).

12. The transfer tooling according to claim 11, wherein
the anti-detachment fastener (333) comprises:
a rotating shaft portion (3331);
a tightening portion (3332), connected to an end of the rotating shaft portion (3331) facing the U-shaped rod (32); and
a limiting portion (3333) that constrains the rotating shaft portion (3331) within the second elongated hole (332),
wherein
the rotating shaft portion (3331) extends along the second direction and penetrates through the second elongated hole (332),
a peripheral wall of the tightening portion (3332) is provided with anti-slip patterns, and
the limiting portion (3333) is disposed protruding from a peripheral wall of the rotating shaft portion (3331).

13. The transfer tooling according to claim 3, wherein
a side of the frame (1) away from the power unit (221) is provided with a buffer portion (13) for protecting the frame (1).

14. The transfer tooling according to claim 1, wherein
both of opposite sides of the frame (1) in the first direction are provided with limiting baffles (12), and the limiting baffles (12) extend along the second direction; and/or
a bottom of the frame (1) is provided with a pad (14), and the pad (14) is connected to a plurality of hollow beams (15) arranged along the second direction through leveling bolts (16), each of the hollow beams (15) extends along the first direction.
